# EUROPEAN PATENT SPECIFICATION

(11) **EP 4 584 450 B1**
(45) Date of publication and mention of the grant of the patent: **03.06.2026**
(21) Application number: 23782652.4
(22) Date of filing: 05.09.2023
(51) Int. Cl.: E04D 5/14, E04D 3/36, B29C 65/48, B29C 65/00, B29C 65/36

(54) **INDUCTION BOARD FOR ADHERED ROOFING SYSTEM**
INDUKTIONSPLATTE FÜR VERKLEBTES DACHSYSTEM
PLAQUE D'INDUCTION DESTINÉE À UN SYSTÈME DE TOITURE COLLÉ

(30) Priority: 06.09.2022 US 202263403889 P
(43) Date of publication of application: 16.07.2025
(73) Proprietor: Amrize Technology Switzerland LLC, 6300 Zug (CH)
(72) Inventor: LABROSSE, Crint, Bay City, MI 48708 (US)
(74) Representative: Osha BWB
(86) International application number: PCT/US2023/031968
(87) International publication number: WO 2024/054426

(56) References cited:
- EP-A2- 1 077 296
- EP-A2- 1 348 821
- SE-C2- 501 045
- US-A1- 2009 320 383

## Description

### TECHNICAL FIELD

The present application relates to an induction board for an adhered roofing system and to the adhered roofing system.

### BACKGROUND

Low slope roofing systems are used to, inter alia, cover and waterproof a roof. Low slope roofing systems are secured to the roof and commonly include insulation that is covered with a coverboard and a membrane to help weatherproof the roof. In some applications, the membrane may comprise PVC (polyvinyl chloride), TPO (thermoplastic polyolefin or EPDM (Ethylene Propylene Diene Terpolymer). The membranes are typically secured to the roof by mechanical fasteners. Such fasteners provide discrete points at which the membrane is secured. When a mechanical fastener is used, the membrane is typically laid in an overlapping fashion such that the fasteners can be covered by a portion of an adjacent section of the membrane. The overlapping portion may then be secured to the adjacent membrane such as by welding or by the use of adhesives. By way of example, US 2009/320383 discloses an improved fastening technique for single-ply roofing membranes for use in a roofing application.

Alternatively current membranes may be secured to the roof, or a coverboard, by the use of an adhesive. This may result in a fully adhered roof system. In such systems the membrane is adhered to the roof deck or coverboard using water based, solvent based or urethane adhesives. These materials are applied as a liquid by spraying or paint type roller applications. While these methods are effective to fully adhere the roofs they do require a relatively substantial amount of time and labor. These systems, when being placed on a roof, are also subject to weather conditions. For example, temperature and humidity each play a role in the ability to even apply a fully adhered roof of this type or the amount of cure time necessary for the adhesive. Further, the adhesive has to cure on the roof after the application of the adhesive and placement of the membrane. In addition, once the membrane is laid onto the adhesive it is relatively difficult to adjust its position. Examples are EP1077296 A2, which shows an anchor plate for securing a membrane to a sub-structure, such as a roof, and EP1348821 A2, that discloses a fastener for use with a roofing membrane.

Yet another type of system used to secure roofing membranes is known as the RhinoBond^{®} System and is available from Sika Sarnafil. This system uses discrete mechanical fasteners at spaced intervals to hold down a coverboard. The mechanical fasteners are coated with a material to which the roofing membrane is fused. This system uses induction to fuse the membrane to the mechanically fastened the membrane to each plate This system is not fully adhered and the membrane is secured to the roof deck at spaced intervals. The system uses an induction power unit and a stationary iron that heats the plate and fuses or adheres the membrane to the coating on the fastener.

In many applications, it would be desirable to be able to provide a fully adhered system without the need to apply adhesive on site and then secure the membrane over the uncured adhesive.

### SUMMARY

According to claim 1, there is provided an induction board for use in a roofing application comprising a base material and metal wire disposed over the base material. The metal wire is configured to act as a susceptor for an induction welding process. The induction board further comprises adhesive disposed over the base material, wherein the metal wire is coated with the adhesive and wherein the adhesive is thermally activated. The metal wire is in the form of metal wire mesh; and the metal wire mesh is laminated to one side of the base material and the adhesive is disposed over the base material and the metal wire mesh.

According to claim 7, there is provided a roof system comprising an induction board secured to a roof deck comprising a base material and metal wire configured to act as a susceptor disposed over the base material. The board further comprises an adhesive disposed over the base material, wherein the metal wire is coated with a thermally activated adhesive. The roofing system further comprises a membrane disposed over the induction board, wherein the membrane is adhered to the base by the thermally activated adhesive. The metal wire is in the form of metal wire mesh; the metal wire mesh is laminated to one side of the base material and the adhesive is disposed over the base material and the metal wire mesh.

### BRIEF DESCRIPTION OF THE DRAWINGS

Figure 1 is cross sectional view of an induction board in accordance with an embodiment; and
Figure 2 is a cross-sectional view of a roofing system in accordance with an embodiment.

### DETAILED DESCRIPTION

An induction board adapted for use on a roof is generally shown at 10 in the Figures. The induction board 10 comprises a base 12, metal wire 14 and an adhesive 16. According to the invention, the metal wire 14 is coated with the adhesive 16. "Coated," as used in connection with the adhesive 16 over the metal wire 14, means that the metal wire is either fully coated or partially coated. Further, metal wire as used herein means any suitable metal material in wire shape that can be used in conjunction with the adhesive 16 and base 12 in order to permit inductive heating of the metal wire 14 as further discussed below.

The base 12 can comprise any suitable material, and may be rigid or semi-rigid. In an embodiment, the base 12 comprises a coverboard. Commonly available coverboards comprise fiberglass mat-faced gypsum, fiber reinforced gypsum, perlite, OSB and plywood. Less commonly, high density insulating panels (compressed polyisocyanurate core with coated glass mat facers). Available coverboards also comprise plastics, cellulose and various combinations of all of the aforementioned materials. In an embodiment, the materials used for such coverboards may also include recycled cellulose and plastic materials. Some coverboards that may be used and comprised of the above materials include, DensDeck^{®} offered by Georgia Pacific Gypsum, Securock ^{®} Gypsum-Fiber Roof Board offered by USG Corporation of Chicago, Illinois, Everboard ^{tm} Composite Roof Cover Board offered by Continuus Materials of The Woodlands, Texas, and Dexcell ^{®} Roof Board offered by Nathional Gypsum Company of Charlott, NC. The coverboard may have a thickness of 1,27 to 2,54 cm one half of an inch to an inch). In an embodiment, the coverboard comprises recycled coverboard. It will be appreciated, however, that the thickness of the coverboard may vary, and any suitable thickness may be use.

In other embodiments, the base 12 may comprise rigid or semi-rigid insulation. By way of example, the base 12 may comprise high density or standard density polyisocyanurate insulation. One suitable polyisocyanurate insulation is Duro-Guard ^{®} offered by Duro-Last, Inc. of Saginaw, MI. The polyisocyanurate may have a thickness of one half of an inch to six inches. It will be appreciated, however, that the thickness of the insulation may vary, and any suitable thickness may be use. In an embodiment, the base 12 may comprise a combination of coverboard and insulation.

As stated earlier, the induction board 10 includes metal wire 14. According to the invention, the metal wire 14 comprises metal wire mesh, as shown in the Figures. The metal wire 14 of the induction board 10 is adapted to be used as a susceptor in an induction heating process. This process is also may be referred to herein as induction welding. In an embodiment, the metal wire mesh may come in segments. By way of example the metal wire mesh segment may be 60,96 cm by 60,96 cm ( 24 inches by 24 inches). The metal wire within the metal wire mesh may comprise any suitable diameter. By way of example the metal wire may have a diameter of 3.56 mm ( .014 inches). It will be appreciated that the sizes for the metal wire mesh may take any size and shape that allows for the placement of the metal wire 14 mesh on a top surface of the base 12 and under a membrane 28 as discussed below.

The induction board 10 further comprises an adhesive 16. According to the invention, the adhesive 16 is thermally activated. In an embodiment, the adhesive 16 is stable from subzero temperatures to at least 65°C (150°F) The adhesive 16 will not activate within this temperature range, and will allow for its activation by introduction of heat above the activation temperature of the adhesive. It will be appreciated that in other embodiments, the temperature range for adhesive stability 16 may vary.

The adhesive 14 is used to coat the metal wire 14. In an embodiment, the metal wire 16 is dip coated in the adhesive 16 and dried. The adhesive 14 may fill all or a portion of the openings in the wire mesh to produce a solid substrate. The coated metal wire 14 is placed on the base 12. In an embodiment, the solid substrate produced can be used as a facer for the base 12. In an embodiment the solid substrate is used as a facer for a high density polyisocyanurate insulation base 12.

According to the invention, the metal wire mesh (14) is laminated to one side of the base material (12) and the adhesive (16) is disposed over the base material (12) and the metal wire mesh (14). In other words, the adhesive 16 can be laminated onto the base 12. The metal wire 14 is placed on the base 12 and may be pressed on the base 12. The adhesive 16 can then be applied onto the metal wire 14 and base 12, such that it covers the metal wire 14. Once the adhesive 16 has coated the wire 14 and is on the base 12, it will not activate until its activating temperature is reached.

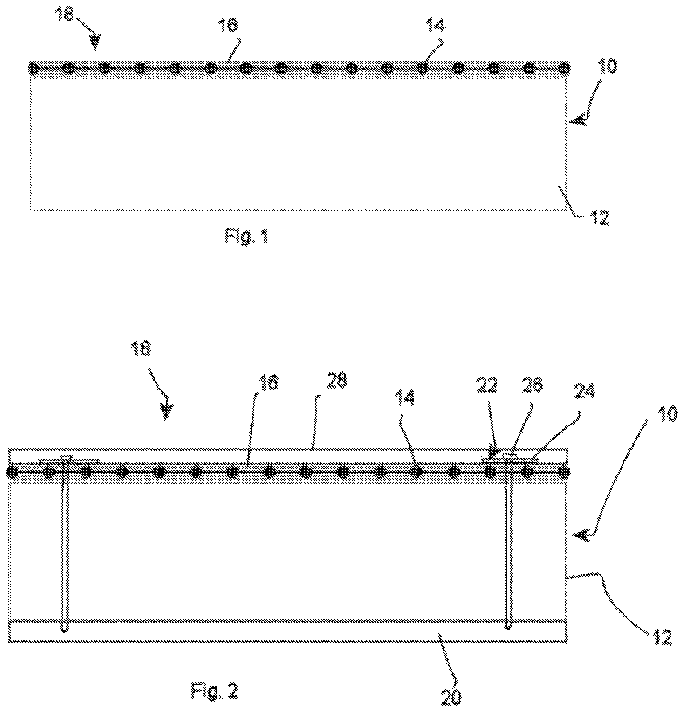

The induction board 10 is adapted to be used in a roof system generally indicated at 8. The roof system comprises the induction board 10 having the base 12, the metal wire 14 and the adhesive 16 thereon. The induction board 10 is adapted to be placed on a roof deck 20. In an embodiment as shown in Figure 2, the induction board is secured to the roof deck by suitable fasteners generally shown at 22. The fasteners 22 may comprise a plate 24 and a screw 26. The plate 24 may comprise a load distribution plate having an opening therethrough which are well-known in the industry. The screw extends through the hole in the plate 24 and into the roof deck 20.

A membrane 28 is disposed over the induction board 10 and the fasteners 22. The membrane 28 may comprise any suitable membrane used to help weatherproof a roof. In an embodiment the membrane 28 comprises a PVC membrane which may also include a scrim therein. In another embodiment, the membrane may comprise a TPO membrane which may also include a scrim therein.

In order to assemble a roof system 18 according to an embodiment, induction boards 10 comprising the base 12, metal wire 14 and adhesive 16 are fastened to the roof deck 20 using the fasteners 22. The membrane 28 is then placed over the induction board 10 and particularly over the adhesive 16 and fasteners 22. The membrane 28 can be moved relatively easily until it is the proper position, which may provide greater flexibility in locating the membrane 28 in a desired location or orientation. Once the membrane 28 is situated, the metal wire 14 can act as a susceptor during an electromagnetic induction heating process. As the metal wire 14 is heated, it, in turn heats the adhesive 16 to a temperature at which the adhesive 16 will activate. The adhesive, in turn adheres the membrane with the induction board 10 which is secured to the roof deck 20. Further the membrane 28 may also be heated in the process of induction heating of the adhesive which may allow greater adhesion of the membrane to the induction board 10.

In an embodiment, the roof system 18 can be used to fully adhere the membrane 28 with the induction board 10. This may be advantageous particularly where the roof is subject to high wind uplift. It will be appreciated that as used herein, a fully adhered roof may have areas where the membrane 28 is not fused to the induction board 10. Such areas may be relatively small compared with the areas where the membrane 28 is fused to the induction board 10. In another embodiment, the roof system can be used to partially adhere the membrane 28 with the induction board 10. In such an embodiment, it may not be necessary to fully adhere the roof, by way of example, where the roof may not experience high wind forces or other weather events. Furthermore in an embodiment, the roof system 18 may be a combination of a fully adhered roof and a partially adhered roof.

Thus, the roof system 18 as described herein may provide flexibility during the roof installation. That is, the membrane 28 may be fully adhered to the induction board 10 over all or some of the roof deck 20 and it may be partially adhered to the induction board 10 over other parts of the roof deck 20. In an embodiment, the membrane 28 may be partially adhered to the induction board such that the membrane 28 is not adhered over portions of the roof deck. Using a metal wire 14 and particularly a metal wire mesh may increase the hail resistance of the roof system 18. In addition the roof system 18 may decrease the labor time necessary to install the roof system 18 to the roof deck. There may be a reduction in the number of mechanical fasteners 22 that may be needed. Further, the roof system 18 substantially reduces, if not eliminates mechanical fastener penetration of the membrane 28. In addition, the roof system 18 may provide a more consistent application of adhesive 16 to the membrane 28 which may result in more consistent adhesion of the membrane 28 to the induction board 10

It is to be understood that the foregoing is a description of one or more embodiments of the invention. The invention is not limited to the particular embodiment(s) disclosed herein, but rather is defined solely by the claims below. Furthermore, the statements contained in the foregoing description relate to particular embodiments and are not to be construed as limitations on the scope of the claimed invention or on the definition of terms used in the claims, except where a term or phrase is expressly defined above. Various other embodiments and various changes and modifications to the disclosed embodiment(s) will become apparent to those skilled in the art.

As used in this specification and claims, the terms *"e.g.,"* "by way of example," and the verbs "comprising," "having," "including," and their other verb forms, when used in conjunction with a listing of one or more components or other items, are each to be construed as open-ended, meaning that the listing is not to be considered as excluding other, additional components or items. Other terms are to be construed using their broadest reasonable meaning unless they are used in a context that requires a different interpretation.

## Claims

1. An induction board (10) for use in a roofing application comprising:
a base material (12);
metal wire (14) disposed over the base material (12) wherein the metal wire (14) is configured to act as a susceptor for an induction welding process;
an adhesive (16) disposed over the base material (12), wherein the metal wire (14) is coated with the adhesive (16) and wherein the adhesive (16) is thermally activated;
wherein the metal wire (14) is in the form of metal wire mesh (14); and
wherein the metal wire mesh (14) is laminated to one side of the base material (12) and the adhesive (16) is disposed over the base material (12) and the metal wire mesh (14).

2. An induction board (10) as set forth in claim 1 wherein the base material (12) rigid or semi-rigid.

3. An induction board (10) as set forth in claim 2 wherein the base (12) is a coverboard.

4. An induction board (10) as set forth in claim 3 wherein the coverboard comprises recycled material.

5. An induction board (10) as set forth in any of the claims 2 to 4 wherein the base material (12) comprises insulation.

6. An induction board (10) as set forth in claims 5 wherein the insulation comprises standard or high density polyisocyanurate.

7. A roof system (18) comprising:
an induction board (10) according to claim 1 secured to a roof deck (20)
a membrane (28) disposed over the induction board (10), wherein the membrane (28) is adhered to the base (12) by the thermally activated adhesive (16).

8. A roof system (18) as set forth in claim 7 wherein the base (12) comprises a coverboard.

9. A roof system (18) as set forth in any of the claims 7 to 8 wherein the base (12) comprises insulation.

10. A roof system (18) as set forth in any of the claims 7 to 9 wherein the membrane (28) is fully adhered to the induction board (10).

11. A roof system (18) as set forth in any of the claims 7 to 10 wherein the membrane (28) is partially adhered to the induction board (10).

12. A method for assembling a roof system (18), in particular according to any one of claims 7 to 11, comprising an induction board (10) according to claim 1;
comprising at least the following steps:
securing the induction board (10) to a roof deck (20) using fasteners (22);
placing a membrane (28) over the induction board (10) and particularly over the metal wire coated with the adhesive (16) and the fasteners (22);
activating the adhesive (16) by heating the metal wire (14) by means of electromagnetic induction
heating, such that the adhesive (16) in turn adheres the membrane (28) with the induction board (10) which is secured to the roof deck (20).

## Patentansprüche

1. Eine Induktionsplatte (10) zur Verwendung in einer Dachanwendung, aufweisend:
ein Basismaterial (12);
einen Metalldraht (14), der über dem Basismaterial (12) angeordnet ist, wobei der Metalldraht (14) dazu ausgebildet ist, als Suszeptor für ein Induktionsschweißverfahren zu wirken;
einen Klebstoff (16), der über dem Basismaterial (12) angeordnet ist, wobei der Metalldraht (14) mit dem Klebstoff (16) beschichtet ist und wobei der Klebstoff (16) thermisch aktiviert ist;
wobei der Metalldraht (14) in Form eines Metalldrahtgewebes (14) vorliegt; und
wobei das Metalldrahtgewebe (14) an einer Seite des Basismaterials (12) laminiert ist und der Klebstoff (16) über dem Basismaterial (12) und dem Metalldrahtgewebe (14) angeordnet ist.

2. Eine Induktionsplatte (10) gemäß Anspruch 1, wobei das Basismaterial (12) starr oder halbstarr ist.

3. Eine Induktionsplatte (10) gemäß Anspruch 2, wobei die Basis (12) eine Abdeckplatte ist.

4. Eine Induktionsplatte (10) gemäß Anspruch 3, wobei die Abdeckplatte recyceltes Material aufweist.

5. Eine Induktionsplatte (10) gemäß einem der Ansprüche 2 bis 4, wobei das Basismaterial (12) eine Isolierung aufweist.

6. Eine Induktionsplatte (10) gemäß Anspruch 5, wobei die Isolierung Polyisocyanurat mit Standard- oder hoher Dichte aufweist.

7. Ein Dachsystem (18), aufweisend:
eine Induktionsplatte (10) gemäß Anspruch 1, die an einer Dachdecke (20) befestigt ist;
eine Membran (28), die über der Induktionsplatte (10) angeordnet ist, wobei die Membran (28) durch den thermisch aktivierten Klebstoff (16) an der Basis (12) befestigt ist.

8. Ein Dachsystem (18) gemäß Anspruch 7, wobei die Basis (12) eine Abdeckplatte aufweist.

9. Ein Dachsystem (18) gemäß einem der Ansprüche 7 bis 8, wobei die Basis (12) eine Isolierung aufweist.

10. Ein Dachsystem (18) gemäß einem der Ansprüche 7 bis 9, wobei die Membran (28) vollständig an der Induktionsplatte (10) befestigt ist.

11. Ein Dachsystem (18) gemäß einem der Ansprüche 7 bis 10, wobei die Membran (28) teilweise an der Induktionsplatte (10) befestigt ist.

12. Ein Verfahren zum Zusammenbauen eines Dachsystems (18), insbesondere gemäß einem der Ansprüche 7 bis 11, das eine Induktionsplatte (10) gemäß Anspruch 1 aufweist; aufweisend zumindest die folgenden Schritte:
Befestigung der Induktionsplatte (10) an einer Dachdecke (20) unter Verwendung von Befestigungsmitteln (22);
Anordnung einer Membran (28) über der Induktionsplatte (10) und insbesondere dem Metalldraht, der mit dem Klebstoff (16) beschichtet ist, sowie den Befestigungsmitteln (22);
Aktivierung des Klebstoffs (16) durch Erwärmung des Metalldrahts (14) mittels elektromagnetischer Induktionserwärmung, sodass der Klebstoff (16) seinerseits die Membran (28) mit der Induktionsplatte (10) verbindet, die an der Dachdecke (20) befestigt ist.

## Revendications

1. Une planche d'induction (10) destinée à être utilisée dans une application de toiture comprenant :
un matériau de base (12) ;
un fil métallique (14) disposé par-dessus le matériau de base (12), dans lequel le fil métallique (14) est configuré pour agir en tant que suscepteur pour un procédé de soudage par induction ;
un adhésif (16) disposé par-dessus le matériau de base (12), dans lequel le fil métallique (14) est revêtu de l'adhésif (16) et dans lequel l'adhésif (16) est activé thermiquement ;
dans lequel le fil métallique (14) est sous la forme d'un treillis de fil métallique (14) ; et
dans lequel le treillis de fil métallique (14) est laminé sur un côté du matériau de base (12) et l'adhésif (16) est disposé par-dessus le matériau de base (12) et le treillis de fil métallique (14).

2. Une planche d'induction (10) selon la revendication 1, dans laquelle le matériau de base (12) est rigide ou semi-rigide.

3. Une planche d'induction (10) selon la revendication 2, dans laquelle la base (12) est un panneau de protection.

4. Une planche d'induction (10) selon la revendication 3, dans laquelle le panneau de protection comprend un matériau recyclé.

5. Une planche d'induction (10) selon l'une quelconque des revendications 2 à 4, dans laquelle le matériau de base (12) comprend une isolation.

6. Une planche d'induction (10) selon la revendication 5, dans laquelle l'isolation comprend du polyisocyanurate de densité standard ou élevée.

7. Un système de toiture (18) comprenant :
une planche d'induction (10) selon la revendication 1, fixée à un platelage de toiture (20) ;
une membrane (28) disposée par-dessus la planche d'induction (10), dans laquelle la membrane (28) est collée à la base (12) par l'adhésif activé thermiquement (16).

8. Un système de toiture (18) selon la revendication 7, dans lequel la base (12) comprend un panneau de protection.

9. Un système de toiture (18) selon l'une quelconque des revendications 7 à 8, dans lequel la base (12) comprend une isolation.

10. Un système de toiture (18) selon l'une quelconque des revendications 7 à 9, dans lequel la membrane (28) est entièrement collée à la planche d'induction (10).

11. Un système de toiture (18) selon l'une quelconque des revendications 7 à 10, dans lequel la membrane (28) est partiellement collée à la planche d'induction (10).

12. Un procédé d'assemblage d'un système de toiture (18), en particulier selon l'une quelconque des revendications 7 à 11, comprenant une planche d'induction (10) selon la revendication 1 ; comprenant au moins les étapes suivantes :
la fixation de la planche d'induction (10) à un platelage de toiture (20) à l'aide de fixations (22) ;
le placement d'une membrane (28) par-dessus la planche d'induction (10) et en particulier le fil métallique revêtu de l'adhésif (16) et les fixations (22) ;
l'activation de l'adhésif (16) en chauffant le fil métallique (14) au moyen d'un chauffage par induction électromagnétique, de sorte que l'adhésif (16) colle à son tour la membrane (28) à la planche d'induction (10) qui est fixée au platelage de toiture (20).
